Europäisches Patentamt

European Patent Office

Office européen des brevets

(11) Veröffentlichungsnummer : **0 116 727**
**B1**

(12) **EUROPÄISCHE PATENTSCHRIFT**

(45) Veröffentlichungstag der Patentschrift :
27.07.88

(51) Int. Cl.⁴ : **B 01 D 46/44, C 21 C  5/40**

(21) Anmeldenummer : 83201819.6

(22) Anmeldetag : 20.12.83

(54) Regelverfahren für eine Entstaubungsanlage.

(30) Priorität : 20.01.83 DE 3301668

(43) Veröffentlichungstag der Anmeldung :
29.08.84 Patentblatt 84/35

(45) Bekanntmachung des Hinweises auf die Patenterteilung : 27.07.88 Patentblatt 88/30

(84) Benannte Vertragsstaaten :
AT BE DE FR GB IT LU NL SE

(56) Entgegenhaltungen :
DE-C-   976 156
US-A- 3 655 361
US-A- 4 406 397

(73) Patentinhaber : METALLGESELLSCHAFT AG
Reuterweg 14 Postfach 3724
D-6000 Frankfurt/M.1 (DE)

(72) Erfinder : Alig, Franz, Dipl.-Ing.
Seestrasse 10
D-8752 Johannesberg (DE)
Erfinder : Hemmerling, Horst
Sudetenring 17
D-6242 Kronberg 2 (DE)
Erfinder : Neulinger, Franz, Dipl.-Ing.
Am Falltor 7
D-6106 Erzhausen (DE)

(74) Vertreter : Rieger, Harald, Dr.
Reuterweg 14
D-6000 Frankfurt am Main (DE)

Jouve, 18, rue St-Denis, 75001 Paris, France

# 0 116 727

**Beschreibung**

Die Erfindung bezieht sich auf ein Regelverfahren für eine Entstaubungsanlage, bei der eine Mehrzahl von Gasströmen von örtlich getrennten Staubquellen abgesaugt, über eine Sammelleitung einer Entstaubungseinrichtung zugeführt und mittels regelbarem Saugzuggebläse in einen Abgaskamin gefördert wird.

Derartige Anlagen werden üblicherweise so betrieben, daß entweder der Druck in der Sammelleitung auf einen konstanten Wert geregelt wird und die Unterdrücke an den einzelnen Absaugstellen von Hand nur einmal eingestellt werden oder aber, daß eine Absaugstelle stellvertretend für das gesamte System geregelt wird. Beide Betriebsweisen führen nur dann zu einem einigermaßen befriedigenden Ergebnis, wenn an keiner Stelle der Entstaubungsanlage größere Schwankungen auftreten. In allen anderen Fällen sind die bekannten Regelverfahren unzureichend, weil sie im Hinblick auf eine optimale Entstaubung auf der sicheren Seite liegen müssen, d. h. daß zu hohe Unterdrücke eingestellt und zu hohe Gasmengen abgesaugt werden. In der Regel ist bei derartigen Anlagen das Saugzuggebläse überdimensioniert und wird die meiste Zeit unterhalb des Auslegungspunktes und trotzdem mit zu hoher Leistung betrieben. Die Folge sind unangemessen hohe Investions- und Betriebskosten, die die Aufwendungen für die Entstaubung unnötig in die Höhe treiben.

Ein Beispiel für eine Entstaubungsanlage mit einer Mehrzahl örtlich getrennter Absaugstellen findet man in Stahlwerken, wo neben einer Hauptentstaubungsanlage für den Konverter in zunehmendem Maße auch Entstaubungsanlagen zur Erfassung und Reinigung der sogenannten Nebenstaubquellen vorgesehen werden. In der folgenden Tabelle sind einige Nebenstaubquellen in Stahlwerken mit ihren bei verschiedenen Betriebszuständen anfallenden Gasmengen zusammengestellt.

| Staubquelle | Betriebsart | Menge m3/h |
|---|---|---|
| Umfüllgrube | Ständiges Absaugen | 25 000 |
| | Umfüllen | 205 000 |
| Abschlackstand | Abschlacken | 105 000 |
| | Ständiges Absaugen | 12 500 |
| Mischer | Einfüllen | 200 000 |
| | Entnehmen | 200 000 |
| | Einfüllen v.Schrott | 1 235 000 |
| | Einfüllen v.Roheisen | 1 875 000 |
| Konverter | Erschmelzen von Rohstahl | 575 000 |
| | Ausleeren v.Rohstahl und Schlacke | 820 000 |
| Argonspül-anlage | Spülen | 260 000 |

Es leuchtet unmittelbar ein, daß bei Schwankungen des Gasanfalls an einzelnen Absaugstellen zwischen 0 und 100% und am Saugzuggebläse zwischen 10 und 100% die bekannten Regelverfahren verbesserungsbedürftig sind. Daraus ergibt sich die Aufgabe, für eine Entstaubungsanlage der eingangs genannten Art ein Regelverfahren vorzuschlagen, mit dem auf die Schwankungen an den einzelnen Absaugstellen besser reagiert werden kann und das ein Betreiben der Anlage mit geringstmöglichen Investions- und Betriebskosten erlaubt.

Zur Lösung dieser Aufgabe wird ein Regelverfahren vorgeschlagen, das dadurch gekennzeichnet ist, daß der Unterdruck an jeder Absaugstelle auf einen vorgegebenen Sollwert $r_i$ eingeregelt wird, daß das Saugzuggebläse auf einen vorgegebenen Druckverlustwert R der Gesamtanlage eingeregelt wird und daß der Druckverlustwert R folgendermaßen geändert wird :

2

a) ist an wenigstens einer Absaugstelle bei voll geöffnetem Regelorgan der Unterdruck geringer als vorgegeben, wird der Druckverlustwert R so lange erhöht, bis an allen Absaugstellen die vorgegebenen Unterdruckwerte erreicht sind,

b) sind an allen Absaugstellen die vorgegebenen Unterdruckwerte erreicht und alle Regelorgane teilweise geschlossen, wird der Druckverlustwert R so lange erniedrigt, bis wenigstens an einer Absaugstelle das Regelorgan voll geöffnet ist.

In weiterer Ausbildung des Erfindungsgedankens ist vorgesehen, daß der Druckverlustwert R erhöht wird, wenn an wenigstens einer Absaugstelle das Regelorgan einen einstellbaren Wert x unterhalb « voll geöffnet » überschreitet bzw., daß der Druckverlustwert R erniedrigt wird, wenn an allen Absaugstellen die Regelorgane einen einstellbaren Wert y unterhalb « voll geöffnet » unterschreiten. Vorteilhafterweise erfolgt die Änderung des Druckverlustwertes R schrittweise. Schließlich ist es zweckmäßig, wenn die Werte x und y und die Änderungsschritte hinsichtlich Größe und zeitlicher Abfolge auf die Regelträgheit der Gesamtanlage abgestimmt werden. Vorteilhafterweise werden bei dem Regelverfahren digital arbeitende Regler verwendet und bei einer großen Anzahl von Regelstellen die übergeordneten Regelaufgaben von einem Prozeßrechner vorgenommen.

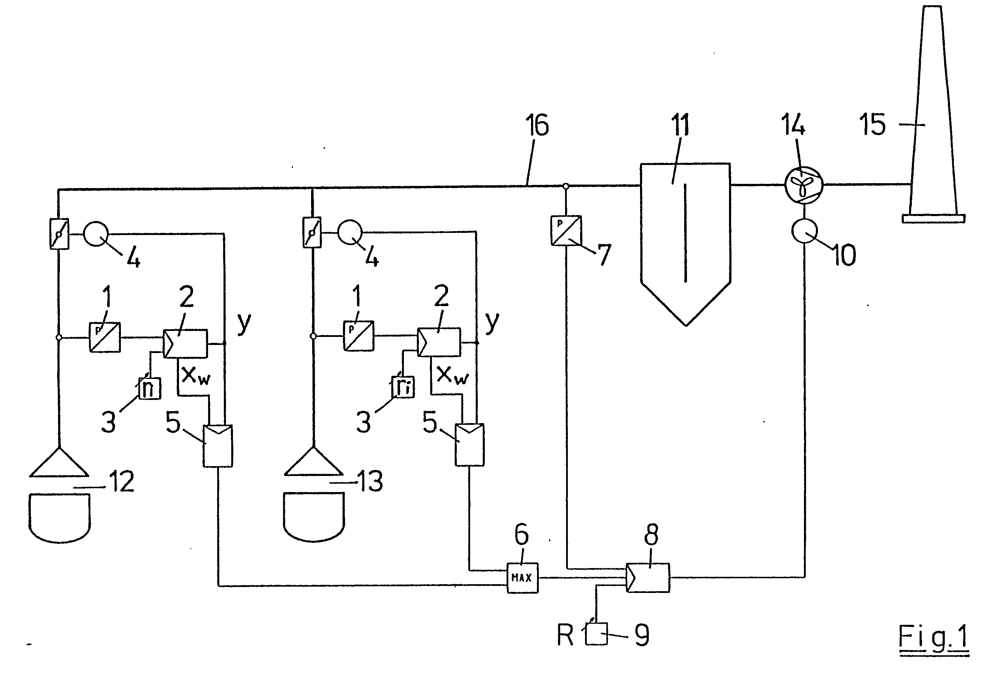

Weitere Einzelheiten werden anhand von Figur 1 erläutert, in der schematisch ein Ausführungsbeispiel mit zwei Absaugstellen dargestellt ist.

Der Druck an der jeweiligen Absaugstelle 12, 13 wird mit einem Druckmeßumformer 1 erfaßt und im Regler 2 mit dem am Sollwert $r_i$ 3 eingestellten Wert verglichen. Bei einer Regelabweichung verstellt der Regler 2 die Klappe 4 im Sinne der Regelabweichung so lange, bis die Regelabweichung zu Null geworden ist.

Der Druck vor der Entstaubungsanlage 11 wird mit dem Druckmeßumformer 7 gemessen und im Regler 8 mit dem am Sollwertsteller R 9 eingestellten Wert verglichen. Bei einer Regelabweichung wird durch Änderung der Gebläsedrehzahl oder durch Verstellung eines Drallreglers 10 am Gebläse 14 der Gasdurchfluß zum Kamin 15 im Sinne der Regelabweichung so lange verändert, bis der Druck den eingestellten Wert erreicht hat.

Reicht der Unterdruck an einer der Absaugstellen 12, 13 trotz voll geöffneter Klappe 4 nicht aus, d. h. das Stellsignal y des Reglers 3 bzw. die Klappenstellung betragen 100%, so steht weiterhin eine Regelabweichung an. Regelabweichung $x_w$ und Stellsignal y bzw. Klappenstellung werden einem weiteren Regler 5, einem sogenannten Führungsregler aufgeschaltet. Ist das Stellsignal bzw. die Klappenstellung 100% und steht weiterhin eine Regelabweichung an, so erhöht der Regler 5 sein Ausgangssignal.

Dieses wird im Regler 8 zu dem im Sollwertsteller R 9 eingestellten Wert addiert, wodurch vom Regler 8 als sogenanntem Folgeregler der Unterdruck in der Gassammelleitung 16 und somit der Gasdurchfluß erhöht wird, bis die Regelabweichung am Regler 2 zu Null geworden ist.

Verläßt die Klappe 4 ihre AUF-Stellung, so verringert der Führungsregler 5 sein Ausgangssignal und der Unterdruck in der Gassammelleitung 16 wird erniedrigt. Maßgebend für die Erhöhung des Unterdruckes ist das größte Ausgangssignal der Führungsregler 5. Von der Maximalwertauswahl 6 wird nur das größte Signal an den Folgeregler 8 weitergegeben.

Der Einfachheit halber wurden nur zwei Absaugstellen im Verfahrensbild dargestellt. Das erfindungsgemäße Verfahren ist darauf jedoch nicht begrenzt und kann bei jeder Anzahl von Absaugstellen, die in der Praxis vorkommen, angewendet werden.

**Patentansprüche**

1. Regelverfahren für eine Entstaubungsanlage, bei der eine Mehrzahl von Gasströmen von örtlich getrennten Staubquellen abgesaugt, über eine Sammelleitung einer Entstaubungseinrichtung zugeführt und mittels regelbarem Saugzuggebläse in einen Abgaskamin gefördert wird, dadurch gekennzeichnet, daß der Unterdruck an jeder Absaugstelle auf einen vorgegebenen Sollwert $r_i$ eingeregelt wird, daß das Saugzuggebläse auf einen vorgegebenen Druckverlustwert R der Gesamtanlage eingeregelt wird und daß der Druckverlustwert R folgendermaßen geändert wird :

a) ist an wenigstens einer Absaugstelle bei voll geöffnetem Regelorgan der Unterdruck geringer als vorgegeben, wird der Druckverlustwert R so lange erhöht, bis an allen Absaugstellen die vorgegebenen Unterdruckwerte erreicht sind,

b) sind an allen Absaugstellen die vorgegebenen Unterdruckwerte erreicht und alle Regelorgane teilweise geschlossen, wird der Druckverlustwert R so lange erniedrigt, bis wenigstens an einer Absaugstelle das Regelorgan voll geöffnet ist.

2. Regelverfahren nach Anspruch 1, dadurch gekennzeichnet, daß der Druckverlustwert R erhöht wird, wenn an wenigstens einer Absaugstelle das Regelorgan einen einstellbaren Wert x unterhalb « voll geöffnet » überschreitet.

3. Regelverfahren nach Anspruch 1, dadurch gekennzeichnet, daß der Druckverlustwert R erniedrigt

3

wird, wenn an allen Absaugstellen die Regelorgane einen einstellbaren Wert y unterhalb « voll geöffnet » unterschreiten.

4. Regelverfahren nach einem der Ansprüche 1 bis 3, dadurch gekennzeichnet, daß die Änderung des Druckverlustwertes R schrittweise erfolgt.

5. Regelverfahren nach einem der Ansprüche 1 bis 4, dadurch gekennzeichnet, daß die Werte x und y sowie die Größe und zeitliche Abfolge der Änderungsschritte auf die Regelträgheit der Gesamtanlage abgestimmt werden.

6. Regelverfahren nach einem der Ansprüche 1 bis 5, dadurch gekennzeichnet, daß digital arbeitende Regler verwendet werden und daß bei einer großen Anzahl von Regelstellen die übergeordneten Regelaufgaben von einem Prozeßrechner übernommen werden.

## Claims

1. Control process for a dust extraction plant in which a number of gas streams are sucked from dust sources spaced apart, supplied via a collecting duct to a dust extraction device and delivered by means of an adjustable induced draught blower into a waste gas chimney, characterised in that the low pressure at each suction point is adjusted to a given desired value $r_i$, that the induced draught blower is set to a given pressure loss value R of the whole plant and that the pressure loss value R is altered as follows :

a) if the low pressure is less than set at at least one suction point with a fully opened controlling member, the pressure loss value R is increased until the given low pressure values are reached at all suction points,
b) if the given low pressure values are reached at all suction points and all controlling members are partly closed, the pressure loss value R is decreased until the controlling member is fully opened at at least one suction point.

2. Control process according to Claim 1, characterised in that the pressure loss value R is increased if at at least one suction point the controlling member exceeds an adjustable value x below « fully opened ».

3. Control process according to Claim 1, characterised in that the pressure loss value R is decreased if at all suction points the controlling members fall short of an adjustable value y below « fully opened ».

4. Control process according to one of Claims 1 to 3, characterised in that the alteration of the pressure loss value R occurs in steps.

5. Control process according to one of Claims 1 to 4, characterised in that the values x and y and the size and sequence in time of the alteration steps are matched to the control inertia of the whole plant.

6. Control process according to one of Claims 1 to 5, characterised in that digitally operating controls are used and that with a large number of control points the higher control functions are taken over by a process control computer.

## Revendications

1. Procédé de réglage pour une installation de dépoussiérage selon lequel plusieurs courants de gaz sont aspirés à partir de sources de poussière localement séparées, amenés par une canalisation collectrice à un dispositif de dépoussiérage et refoulés au moyen d'un ventilateur de tirage par aspiration dans une cheminée de gaz perdus, caractérisé en ce que l'on règle la dépression à chaque point d'aspiration à une valeur de consigne $r_i$ préfixée, on règle le ventilateur de tirage par aspiration à une perte de charge R préfixée de l'ensemble de l'installation et on change la perte de charge R de la manière suivante :

a) si la dépression en au moins un point d'aspiration est inférieure à la valeur préfixée, alors que l'organe de réglage est complètement ouvert, on augmente la perte de charge R jusqu'à ce que les dépressions en tous les points d'aspiration aient atteint les valeurs préfixées et,
b) si les valeurs préfixées de la dépression ont été atteintes en tous les points d'aspiration et tous les organes de réglage sont partiellement fermés, on abaisse la perte de charge R jusqu'à ce que l'organe de réglage en au moins un point d'aspiration soit complètement ouvert.

2. Procédé selon la revendication 1, caractérisé en ce que l'on augmente la perte de charge R lorsque l'organe de réglage en au moins un point d'aspiration dépasse une valeur ajustable x au-dessous de « complètement ouvert ».

3. Procédé selon la revendication 1, caractérisé en ce que l'on abaisse la perte de charge R lorsque les organes de réglage en tous les points d'aspiration sont plus bas qu'une valeur ajustable y au-dessous de « complètement ouvert ».

4. Procédé selon une des revendications 1 à 3, caractérisé en ce que le changement de la perte de charge R est opéré pas à pas.

5. Procédé selon une des revendications 1 à 4, caractérisé en ce que l'on accorde les valeurs x et y, de même que la grandeur et la succession dans le temps des pas de changement, à l'inertie de réglage de l'ensemble de l'installation.

6. Procédé selon une des revendications 1 à 5, caractérisé en ce que l'on utilise des régulateurs de type numérique et que les tâches de réglage d'ordre supérieur sont accomplies par un ordinateur industriel au cas où le nombre de points de réglage est élevé.

Fig.1

0 116 727